(19) **Europäisches Patentamt / European Patent Office / Office européen des brevets**

(11) **EP 2 404 968 A1**

(12) **EUROPEAN PATENT APPLICATION**
published in accordance with Art. 153(4) EPC

(43) Date of publication:
**11.01.2012 Bulletin 2012/02**

(21) Application number: **10748467.7**

(22) Date of filing: **24.02.2010**

(51) Int Cl.:
**C08L 69/00** *(2006.01)* **C08K 5/42** *(2006.01)*
**C08L 25/04** *(2006.01)* **C08L 27/12** *(2006.01)*
**C08L 83/04** *(2006.01)* **C08L 101/02** *(2006.01)*

(86) International application number:
**PCT/JP2010/001225**

(87) International publication number:
**WO 2010/100865 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.03.2009 JP 2009048882**

(71) Applicant: **Sony Corporation**
**Tokyo 108-0075 (JP)**

(72) Inventor: **INAGAKI, Yasuhito**
**Tokyo 108-0075 (JP)**

(74) Representative: **Müller - Hoffmann & Partner**
**Innere Wiener Straße 17**
**81667 München (DE)**

(54) **AROMATIC POLYCARBONATE RESIN COMPOSITION AND MOLDED ARTICLE THEREOF**

(57)    [Object] To provide a polycarbonate resin composition that is thin but has high flame retardancy and surface hardness for which a hard coating layer is not required, causes less gas generation in molding, has excellent heat resistance, preservation stability, and recyclability, and does not contain bromine and phosphate flame retardants, and to provide a molded product thereof.

[Solving Means] A polycarbonate resin composition includes, as a main resin material, an aromatic polycarbonate resin occupying 85 to 95 mass% of the main resin material and having a weight-average molecular weight of 37000 to 55000 in polystyrene equivalent molecular weight, and a polystyrene resin occupying 15 to 5 mass% of the main resin material and containing no rubber component. A resin component other than the above may be contained resulting from recycled materials as long as the characteristics of the resin composition are not impaired. A polyfluoroolefin resin, an organic sulfonate flame retardant, and a silicon flame retardant are added to the resin material. The aromatic polycarbonate resin composition is molded into a predetermined shape.

**Description**

Technical Field

The present invention relates to an aromatic polycarbonate resin composition and a molded product of the same, and more particularly to, an aromatic polycarbonate resin composition having flame retardancy, surface hardness for which a hard coating layer is not required, and excellent heat resistance, preservation stability, and recyclability.

Background Art

In recent years, reduction in thickness and weight of a casing or the like has been requested in various fields of equipment, for example, electrical/electronic equipment as representatives of home appliances, office automation (OA) equipment, and information/communication equipment. To meet the request, resin materials constituting the above equipment are also requested for improvement of mechanical strength. Therefore, the transition of resin materials is progressing in which a polycarbonate (PC) resin that is thin but has high mechanical strength is intended to be used instead of a conventional general-purpose plastic typified by a polystyrene (PS) resin, an acrylonitrile-butadiene-styrene (ABS) resin, and the like.

Further, in view of the social needs considering environmental protection, the equipment is requested to be made of resin materials that do not contain a halogenated flame retardant such as a chlorine compound or a bromine compound. Specifically, there is increasing demand for PC resins to which a phosphorus flame retardant is added (PC resin, composite materials of ABS resin and PC resin, etc.) instead of a flame-retardant PS resin or a flame-retardant ABS resin to which a bromine flame retardant is added.

In the case where a PC resin is used as a material of a casing or an external part under such circumstances, since the PC resin does not have sufficient surface hardness, it is necessary to form a protective layer on the surface of the PC resin so as to prevent scratches or maintain the outer appearance.

In this regard, for example, Japanese Examined Patent Application Publication No. Hei 03-74629 and Japanese Examined Patent Application Publication No. Hei 06-2374 propose a PC resin in which an acrylic monomer or an organoalkoxysilane monomer is used to provide a hard coating layer on a surface. When such an additional protective layer is formed, however, the number of steps in the manufacture process is increased, which causes a huge burden of the increase in costs such as material costs or labor costs. Further, the protective layer is a separate material and therefore is difficult to be recycled, which goes counter to resource protection and also imposes a large burden on the environment.

Further, generally, a phosphate flame retardant such as phosphate ester is added to a flame-retardant PC resin currently put into practical use. However, the phosphate flame retardant is liable to cause hydrolysis or thermal cracking, and the additive amount to the PC resin has to be increased. For that reason, a PC resin composition to which the phosphate flame retardant is added has problems of generation of gas in injection molding and the significant lowering of heat resistance, preservation stability under high temperature and high humidity conditions, and recyclability of the resin composition.

In this regard, Patent Document 1 described later proposes, as a flame-retardant PC resin that does not contain a halogenated flame retardant or a phosphate flame retardant, a flame-retardant polycarbonate resin composition constituted of 50 to 97.95 mass% of a polycarbonate resin as (A) component, 2 to 47 mass% of a thermoplastic resin other than a polycarbonate resin as (B) component, and 0.05 to 3 mass% of an aromatic vinyl resin containing a salt of an acid group as (C) component. Here, the thermoplastic resin is a styrene resin or a polyester resin, for example, and the aromatic vinyl resin is a polystyrene sulfonic acid metal salt, for example. Further, for example, 0.02 to 5 parts by mass of a drip retarder serving as a fluorine resin may be combined as (D) component, and 0.1 to 10 parts by mass of a functional group-containing silicone compound may be combined as (E) component.

Patent Document 1 describes that the structure described above can provide a flame-retardant polycarbonate resin composition having excellent fluidity, solvent resistance, and flame retardancy, and also capable of obtaining a molded product having excellent durability of anti-static performance for which dust is not attached.

Further, in Patent Document 2 described later, a polycarbonate resin composition is proposed by the same applicant of the Patent Document 1. The polycarbonate resin composition is constituted of (A) 60 to 97 mass% of an aromatic polycarbonate resin and (B) 3 to 40 mass% of an acrylonitrile-styrene resin whose melt flow rate (MFR) is 5 or more at 200°C and under 5 kg of load, and containing as appropriate, with respect to 100 parts by mass in total of (A) and (B), (C) 0 to 37 parts by mass of a shock resistance improver, (D) 0 to 3 parts by mass of an organic alkali metal salt and/or an organic alkali earth metal salt, (E) 0 to 3 parts by mass of a functional group-containing silicone compound, (F) 0 to 55 parts by mass of an inorganic filler, and (G) 0 to 2 parts by mass of a polyfluoroolefin resin.

Patent Document 2 describes that the use of the acrylonitrile-styrene resin whose melt flow rate (MFR) is 5 or more at 200°C and under 5 kg of load as (B) component enables the aromatic polycarbonate resin composition to achieve significantly high fluidity while maintaining flame retardancy and heat resistance. Further, Patent Document 2 describes that the addition of a shock resistance improver enables a molded product having high shock resistance to be obtained.

Furthermore, Patent Document 3 described later proposes, by the above applicant, a polycarbonate resin composition including a combination of (A) 5 to 50 mass% of a ground product of a recording medium made of an aromatic polycarbonate resin substrate, (B) 0.05 to 3 mass% of a functional group-containing silicone compound, and (C) 47 to 94.95 mass% of an aromatic polycarbonate resin, the polycarbonate resin composition being a flame-retardant polycarbonate resin composition **characterized in that** the mass ratio (B)/(A) of (B) component to (A) component is 0.005 to 0.2. Patent Document 3 also describes that the ground product of a recording medium can be reused to obtain a flame-retardant polycarbonate resin composition similar to that proposed in Patent Document 1 or 2.

Patent Document 1: Japanese Patent Application Laid-open No. 2002-220527 (claims 1-7, pages 4-6 and 9-11, embodiments 4-6)
Patent Document 2: Japanese Patent Application Laid-open No. 2004-143410 (claim 1, pages 7-13, embodiment 6)
Patent Document 3: Japanese Patent Application Laid-open No. 2005-54085 (claim 1, pages 3-7, 9 and 10, embodiment 4)

Disclosure of the Invention

Problem to be solved by the Invention

Patent Documents 1 to 3 show, as a flame-retardant PC resin that does not contain a halogenated flame retardant or a phosphate flame retardant, the examples of the flame-retardant polycarbonate resin composition containing an aromatic polycarbonate resin, an acrylonitrile-styrene resin, a polyfluoroolefin resin, an organic sulfonate flame retardant, and a silicon flame retardant, but sufficient flame retardancy has not yet been obtained and the reduction in thickness and flame retardancy requested for home appliances have not been achieved. Further, surface hardness has not been studied.

The present invention has been made in view of the circumstances as described above, and it is an object of the present invention to provide a polycarbonate resin composition that is thin but has high flame retardancy and surface hardness for which a hard coating layer is not required, causes less gas generation in molding, has excellent heat resistance, preservation stability, and recyclability, and does not contain bromine and phosphate flame retardants, and to provide a molded product thereof.

Means for solving the Problem

The inventor of the present invention has been dedicated to studies and as a result of that, has found that the above-mentioned problems are solved by adding a predetermined material that imparts flame retardancy to a resin material in which an aromatic polycarbonate resin having a predetermined weight-average molecular weight and a polystyrene resin containing no rubber component are mixed at a predetermined mass fraction, to thereby complete the present invention.

Specifically, the present invention relates to an aromatic polycarbonate resin composition including: as a main resin material, an aromatic polycarbonate resin occupying 85 to 95 mass% of the main resin material and having a weight-average molecular weight of 37000 to 55000 in polystyrene equivalent molecular weight, and a polystyrene resin occupying 15 to 5 mass% of the main resin material and containing no rubber component; and as an additive agent, a polyfluoroolefin resin, an organic sulfonate flame retardant, and a silicon flame retardant. Further, the present invention relates to a molded product, which is formed by molding the aromatic polycarbonate resin composition into a predetermined shape.

It should be noted that the polystyrene equivalent molecular weight refers to an estimated value of a molecular weight, in which a molecular weight of a sample is assumed to be the same as that of a polystyrene molecular weight standard substance that causes elution in the same elution time as in the sample in a GPC (Gel Permeation Chromatography) measurement using chloroform as a solvent. Further, the term "main" of the "main resin material" means that resin components other than the main resin material may be included as long as characteristics of the aromatic polycarbonate resin composition are not impaired and that, for example, unspecified resin components at a small amount may be included due to the use of recycled materials.

Effect of the Invention

In the aromatic polycarbonate resin composition of the present invention, the aromatic polycarbonate resin having a weight-average molecular weight of 37000 to 55000 in polystyrene equivalent molecular weight is suitable to moderately maintain the mechanical strength (particularly, shock resistance), flame retardancy, solvent resistance, fluidity, and molding processability of the aromatic polycarbonate resin composition as shown in Examples to be described later. Further, the polystyrene resin improves the surface hardness, oil resistance, solvent resistance, and fluidity of the aromatic polycarbonate resin composition. As one feature of the present invention, the polystyrene resin does not contain a rubber component and accordingly the mechanical strength and flame retardancy of the aromatic polycarbonate resin are less impaired and high surface hardness is obtained.

If the ratio of the aromatic polycarbonate resin in the main resin material and the ratio of the polystyrene resin therein are 85 to 95 mass% and 15 to 5 mass% of the resin material, respectively, the effect of improving the mechanical strength and flame retardancy by the aromatic polycarbonate resin and the effect of improving the surface hardness by the aromatic polycarbonate resin composition are effectively exerted as shown in Examples to be described later.

In the aromatic polycarbonate resin composition, the polyfluoroolefin resin functions to suppress a drip phenomenon at a time of burning. The organic sulfonate flame retardant imparts flame retardancy to the aromatic polycarbonate resin composition. The silicon flame retardant covers the surface of the aromatic polycarbonate resin composition being burned, for example, to thereby prevent the aromatic polycarbonate resin composition from being continuously burned and easily extinguish flame. In the aromatic polycarbonate resin composition, the overall effects of those three components are exerted and flame retardancy to be required is achieved. Therefore, the additive amount of those additive agents is less required and the characteristics of the resin material are not impaired accordingly. As a result, the aromatic polycarbonate resin composition is excellent in mechanical strength, surface hardness, solvent resistance, heat resistance, and preservation stability under high temperature and high humidity, and also has appropriate fluidity and molding processability.

Further, since a hard coating layer is unnecessary, recyclability is improved. As a result, off-cuts of the aromatic polycarbonate resin (spool or runner material) can be used as raw materials for reuse, which contributes to resource saving to a great extent.

Mode for Carrying Out the Invention

In the aromatic polycarbonate resin composition of the present invention, the aromatic polycarbonate resin and the polystyrene resin may occupy 93 to 95 mass% and 7 to 5 mass% of the main resin material, respectively.

Further, the polyfluoroolefin resin may have an additive amount of 0.002 to 0.005 by mass ratio of the main resin material.

Further, the organic sulfonate flame retardant may have an additive amount of 0.0005 to 0.010 by mass ratio of the main resin material.

Further, the silicon flame retardant may have an additive amount of 0.001 to 0.020 by mass ratio of the main resin material.

Further, the polystyrene resin may contain one or more kinds of polystyrene resins and/or one or more kinds of acrylonitrile-styrene copolymer resins.

Further, the organic sulfonate flame retardant may contain a compound having a structure in which sulfonates are introduced to a polymer having aromatic rings.

Further, the organic sulfonate flame retardant may include the number of sulfonates corresponding to 0.01 to 15 mass% in terms of sulfur content.

Further, the silicon flame retardant may contain a polyorganosiloxane resin.

Hereinafter, detailed description will be given on an aromatic polycarbonate resin composition based on embodiments of the present invention, but the present invention is not limited to those examples. It should be noted that as described above, the term "main" of "the main resin material" means that unspecified resin components at a small amount are contained without impairing the characteristics of the aromatic polycarbonate resin composition due to the use of recycled raw materials. The term does not have other essential meanings, so "the main resin material" is hereinafter referred to simply as "the resin material" so as to avoid complication.

<A component: Aromatic polycarbonate resin>

An aromatic polycarbonate resin whose weight-average molecular weight is 37000 to 55000 in polystyrene equivalent molecular weight is suitable to moderately maintain the mechanical strength, flame retardancy, solvent resistance, fluidity, and molding processability of the aromatic polycarbonate resin composition.

The aromatic polycarbonate resin may be used in one kind alone or used in combination of two or more kinds of resins. In the case where two or more kinds of resins are used in combination, it is necessary for an arithmetic mean of a weight-average molecular weight to fall within the range of 37000 to 55000, the arithmetic mean of the weight-average molecular weight being given by the following expression:

$$\text{Arithmetic mean of weight-average molecular weight} =$$
$$\Sigma(\text{weight-average molecular weight of each aromatic}$$
$$\text{polycarbonate resin component} \times \text{content rate}).$$

It should be noted that the sum in the above expression takes the total sum of all aromatic polycarbonate resin components.

In the case where the weight-average molecular weight of the aromatic polycarbonate resin is larger than 55000, the fluidity and molding processability of the aromatic polycarbonate resin composition at a time of fusion become poor, which makes it difficult to perform molding by injection molding or the like. On the other hand, in the case where the weight-average molecular weight is smaller than 37000, the mechanical strength (particularly, a degree of impact resistance) or flame retardancy of the resin composition is lowered, or solvent resistance is lowered and accordingly a solvent crack (crack caused by chemicals) is liable to occur.

The ratio of the aromatic polycarbonate resin in the resin material is 85 to 95 mass% of the mass of the resin material, and more preferably 93 to 95 mass%. In the case where the ratio of the aromatic polycarbonate resin is less than 85 mass%, the mechanical strength or flame retardancy of the aromatic polycarbonate resin composition is lowered. On the other hand, in the case where the ratio is larger than 95 mass%, the hardness of the surface of the aromatic polycarbonate resin composition is lowered.

The structure of the aromatic polycarbonate resin is not particularly limited. Generally, however, an aromatic polycarbonate resin synthesized by a reaction of dihydric phenol and a carbonate precursor can be used. The dihydric phenol and carbonate precursor to be used are also not limited particularly, and various types of materials can be used. Further, a synthesis method is also not particularly limited, and examples of the synthesis method include an interfacial polymerization method, a melt transesterification, solid-phase transesterification of carbonate prepolymer, and ring opening polymerization of a cyclic carbonate compound.

The aromatic polycarbonate resin may be a newly synthesized virgin material, scraps or trash generated in manufacturing processes, off-cuts of resins used for manufacturing other aromatic polycarbonate resin products (spool material, runner material, etc.), or a recovered material recovered from used aromatic polycarbonate resin products. Examples of the aromatic polycarbonate resin products described above include optical discs such as a digital versatile disc (DVD; registered trademark), a compact disc (CD; registered trademark), a magneto-optical disc (MO; registered trademark), a mini disc (MD; registered trademark), and a Blu-ray Disc (BD; registered trademark), optical films for liquid crystal televisions, and bottles for bottled water.

In the case where the aromatic polycarbonate resin recovered from a used product is used, various types of adherent matters such as a label, a film, a metal reflective layer, a plating layer, a recording material layer, and an adhesive layer remain on the resin. In the present invention, the resin with those adherent matters may be used, or a resin from which the adherent matters are separated/removed by a conventional known method may be used.

The adherent matters are not particularly limited and include materials for forming films or painting material that are generally used in optical discs. Examples of the materials include a polyolefin film (polyethylene film, polypropylene film, etc.), a resin, a paper label, a metal reflective layer made of aluminum Al, gold Au, or silicon Si, an organic dye including a cyanine dye, a recording material layer made of tellurium Te, selenium Se, sulfur S, germanium Ge, indium In, antimony Sb, iron Fe, terbium Tb, cobalt Co, silver Ag, cerium Ce, and bismuth Bi, an adhesive layer made of at least one kind of acrylic acrylate, ether acrylate, and vinyl monomer, oligomer, or polymer, a label ink layer made of at least one kind of an ultraviolet curable monomer, oligomer, and polymer, a polymerization initiator, a pigment, and an adjuvant.

From the viewpoint of recycle at as low cost as possible, it is suitable to reuse resins containing impurities. For example, it is desirable for the recovered aromatic polycarbonate resin to be finely crushed, left or kneaded/fused with a predetermined additive, and palletized to be used as an aromatic polycarbonate resin material (A component). Alternatively, depending on the structure of an injection molding apparatus, the recovered aromatic polycarbonate resin may be put in a hopper of the injection molding apparatus directly together with other resin components or various additive agents, and a molded body made of the aromatic polycarbonate resin composition may be obtained.

It should be noted that the adherent matters can be removed by mechanical or chemical methods proposed in, for example, Japanese Patent Application Laid-open Nos. Hei 06-223416, Hei 10-269634, Hei 10-249315, and the like.

<B component: Polystyrene resin that does not contain rubber component>

A polystyrene resin is used for improving the surface hardness, oil resistance, solvent resistance, and fluidity of the aromatic polycarbonate resin composition. As one feature of the present invention, the polystyrene resin does not contain a rubber component, and accordingly the mechanical strength and flame retardancy of the aromatic polycarbonate resin are less impaired and high surface hardness is obtained. The ratio of the polystyrene resin in the resin material is 5 to 15 mass%, and more preferably 5 to 7 mass%. In the case where the ratio of the polystyrene resin is less than 5 mass%, the hardness of the surface of the aromatic polycarbonate resin composition is lowered. On the other hand, in the case where the ratio is more than 15 mass%, the mechanical strength or flame retardancy of the aromatic polycarbonate resin composition is lowered.

The above-mentioned polystyrene resin that does not contain a rubber component is not particularly limited. Examples of the polystyrene resin include an acrylonitrile-styrene copolymer (AS) resin, a polystyrene (PS) resin, an acrylonitrile-chlorinated polyethylene-styrene (ACS) resin, and an acrylonitrile-styrene-acrylate copolymer (ASA) resin. Of those, the AS resin, the PS resin, and the ASA resin are more preferable, and the AS resin is the most preferable from the viewpoint of compatibility with the PC resin. When an acrylonitrile-butadiene-styrene copolymer (ABS) resin containing a rubber component was used as a styrene resin in Comparative Example 6 to be described later, the flame retardancy was significantly lowered. This is considered because the C=C double bond included in the rubber component is rich in reactivity. On the other hand, Patent Documents 1 to 3 do not report that the difference in flame retardancy of the resin composition is generated between the case of using the AS resin and the case of using the ABS resin. In the present invention, constituent resins are narrowed down in order to improve the surface hardness of the resin composition, with the result that the difference as described above may be caused.

The weight-average molecular weight of those polystyrene resins containing no rubber component is generally 50000 to 500000 in polystyrene equivalent molecular weight, but it is preferable to be 100000 to 300000. In the case there the weight-average molecular weight is less than 50000, there may be a case where the effect of improving the oil resistance and solvent resistance of the aromatic polycarbonate resin composition is not obtained and a case where mechanical characteristics such as shock resistance are lowered. Further, in the case where the weight-average molecular weight is more than 500000, the fluidity of the aromatic polycarbonate resin composition may be lowered.

The above-mentioned polystyrene resin containing no rubber component may be a newly synthesized virgin material, scraps or trash generated in manufacturing processes, off-cuts of polystyrene resins used for manufacturing other polystyrene resin products (spool material, runner material, etc.), or a recovered material recovered from used polystyrene resin products. As such a polystyrene resin product, for example, a transparent reel material used in a video cassette for commercial use or a blade of a used electric fan may be used as the AS resin. Alternatively, expanded polystyrene foam used as fish boxes or a buffer material for home appliances, or a polystyrene tray used for food may be used as the PS resin.

<C component: Polyfluoroolefin resin>

A polyfluoroolefin resin functions to suppress a drip phenomenon at a time of burning in the aromatic polycarbonate resin composition. The additive amount of the polyfluoroolefin resin in the aromatic polycarbonate resin composition is preferably 0.002 to 0.005 (0.2 to 0.5%) by mass ratio of the resin material. When the additive amount of the polyfluoroolefin resin is less than 0.002 (0.2%) by mass ratio of the resin material, it is difficult to suppress the drip phenomenon. On the other hand, when the additive amount is more than 0.005 (0.5%), the effect of suppressing the drip phenomenon is saturated, which causes high costs due to the lowered efficiency or causes a negative effect of lowering the mechanical strength or fluidity of the resin to be liable to occur.

The polyfluoroolefin resin described above is not particularly limited, and examples thereof include polydifluoroethylene, polytetrafluoroethylene, tetrafluoroethylene-hexafluoropropylene copolymer, and copolymer of tetrafluoroethylene and ethylene monomer. Those materials may be used alone or used in combination of various kinds thereof. Of those, polytetrafluoroethylene is more preferable, and an average molecular weight thereof is preferably 50000 or more, and more preferably 100000 or more and 20000000 or less. It is more preferable for the polyfluoroolefin resin to have a fibril-forming ability.

<D component: Organic sulfonate flame retardant>

An organic sulfonate flame retardant is used for imparting flame retardancy to the aromatic polycarbonate resin composition. The additive amount of the organic sulfonate flame retardant in the aromatic polycarbonate resin composition is preferably 0.0005 to 0.010 (0.05 to 1.0%) by mass ratio of the resin material. When the additive amount of the organic sulfonate flame retardant is less than 0.0005 (0.05%) by mass ratio of the resin material, the effect of imparting flame retardancy to the aromatic polycarbonate resin composition is not sufficient. On the other hand, when the additive amount is more than 0.010 (1.0%), an economic efficiency becomes poor due to the lowered efficiency, and the effect of imparting flame retardancy is also saturated, which lowers the efficiency.

It is necessary to have a predetermined chemical composition or structure.
Various materials may be used as the organic sulfonate flame retardant, and examples thereof include an organic sulfonate having at least one carbon atom. The organic sulfonate may be an alkali metal salt such as a sodium salt, a potassium salt, a lithium salt, or a cesium salt, or an alkali earth metal salt such as a magnesium salt, a calcium salt, a strontium salt, or a barium salt, and may also be a salt of a metal element such as iron Fe, tin Sn, or zinc Zn, an ammonia salt, or an organic alkylamine salt.

An organic group of the organic sulfonate may be substituted with a halogen atom such as fluorine, chlorine, or bromine. In the halogen atoms, fluorine is the most preferable and an alkali metal salt or alkali earth metal salt of a perfluoroalkanesulfonic acid represented by the general formula $(C_nF_{2n+1}SO_3)_mM$ is typical (where n represents natural numbers of 1 to 10, M represents lithium, sodium, potassium, and cesium, or magnesium, calcium, strontium, and barium, and m is equivalent to a valence 1 or 2 of M). More specifically, perfluoromethane sulfonate, perfluoroethane sulfonate, perfluoropropane sulfonate, perfluorobutane sulfonate, perfluoromethylbutane sulfonate, perfluorohexane sulfonate, perfluoroheptane sulfonate, perfluorooctane sulfonate, and the like may be used. Of those, potassium perfluorobutane sulfonate is particularly suitable.

In addition, alkyl sulfonate, benzene sulfonate, alkyl benzene sulfonate, diphenyl sulfonate, naphthalene sulfonate, 2,5-dichlorobenzene sulfonate, 2,4,5-trichlorobenzene sulfonate, diphenyl sulfone-3-sulfonate, diphenyl sulfone-3,3'-disulfonate, naphthalene trisulfonate, and their fluorine substitutions may be used. Of those, the diphenyl sulfonate is particularly suitable.

Further, an aromatic polymer sulfonate in which a sulfo group is introduced into high-molecular-weight aromatic polymer and is changed into a salt is suitable. The aromatic polymer may include a polymer having an aromatic ring in the side chain and a polymer having an aromatic ring in the main chain, and the former is more suitable.

The polymer having an aromatic ring in the side chain may include, for example, polystyrene (PS), high impact polystyrene (HIPS: styrene-butadiene copolymer), acrylonitrile-styrene copolymer (AS), acrylonitrile-butadiene-styrene copolymer (ABS), acrylonitrile-chlorinated polyethylene-styrene (ACS), acrylonitrile-styrene-acrylate copolymer (ASA), acrylonitrile-ethylene propylene rubber-styrene copolymer (AES), and acrylonitrile-ethylene-propylene-diene-styrene copolymer (AEPDMS). Of those, any one kind or various kinds of polymers can be used. The weight-average molecular weight of those polymers having an aromatic ring in the side chain is preferably 50000 to 1000000 in polystyrene equivalent molecular weight, and is most suitably 100000 to 300000.

The polymer having an aromatic ring in the main chain may include, for example, polycarbonate (PC), polyphenylene oxide (PPO), polyethylene terephthalate (PET), polybutylene terephthalate (PBT), and polysulfone (PSF). Of those, any one kind or various kinds of polymers can be used. The weight-average molecular weight of those polymers having an aromatic ring in the main chain is preferably 10000 to 200000 in polystyrene equivalent molecular weight, and is most suitably 25000 to 100000.

In the high-molecular-weight aromatic polymers described above, the content in a unit of monomer having an aromatic ring is within the range of 1 mol% to 100 mol%, preferably within the range of 30 mol% to 100 mol%, and more preferably within the range of 40 mol% to 100 mol%. When the unit of monomer having an aromatic ring is less than 1 mol%, the introduction rate of the sulfo group to aromatic polymer is lowered, and accordingly the flame retardancy cannot be imparted to the aromatic polycarbonate resin composition sufficiently.

As the aromatic polymers described above, for example, used and recovered materials or off-cuts generated in factories can be used. The use of recovered materials or off-cuts as raw materials allows costs to be lowered.

A predetermined amount of sulfo group is introduced to the aromatic polymers and changed into salts, and accordingly a flame retardant with which high flame retardancy can be imparted in the case of being contained in the aromatic polycarbonate resin composition can be obtained. Methods of introducing the sulfo group to the aromatic polymers include, for example, a method of performing sulfonation treatment on aromatic polymers by a predetermined amount of sulfonatiny agent.

As the sulfonatiny agent, one containing moisture of 3 mass% or less is desirable. Specifically, examples of the sulfonatiny agent include sulfur trioxide, oleum, chlorosulfonic acid, and polyalkylbenzene sulfonic acids. Of those, any one kind of sulfonatiny agents can be used alone or in combination of various kinds of them. Further, as the sulfonatiny agent, for example, a complex with a Lewis base, such as alkyl phosphate ester or dioxane can be used.

In the case where 96 mass% of a concentrated sulfuric acid is used as the sulfonatiny agent, if a cyano group or an ester group is present in the aromatic polymers, those groups are subjected to hydrolysis by the contained moisture in sulfonation of the aromatic polymers, and converted to an amide group or a carboxyl group to thereby generate a flame retardant containing an amide group or a carboxyl group having a high moisture absorption effect. When such a flame retardant containing a large amount of amide groups or carboxyl groups is used, high flame retardancy can be imparted to the aromatic polycarbonate resin composition. However, moisture is absorbed from the outside with a lapse of time, which may impair the outer appearance of the aromatic polycarbonate resin composition due to discoloration, or may become a cause of defects such as deterioration of the mechanical strength of the resin composition.

Considering the matters described above, it is desirable to perform sulfonation treatment on aromatic polymers in a state having as low moisture content as possible. Such a method includes a method of adding a predetermined amount of the predetermined sulfonatiny agent to a solution obtained by dissolving aromatic polymers in an organic solvent (chlorine solvent) and reacting them. In addition to this, there is a method of adding a predetermined amount of the predetermined sulfonatiny agent to dispersion liquid obtained by dispersing powdery aromatic polymers in an organic solvent and reacting them. Further, a method of directly putting aromatic polymers in the sulfonatiny agent for reaction, a method of directly spraying a sulfonation gas, for example, a sulfur trioxide SO3 gas, to the powdery aromatic polymers for reaction, and the like are conceived. Of those methods, a method of directly spraying a sulfonation gas to powdery aromatic polymers to react them, in which an organic solvent is not used, is particularly preferable.

The introduction rate of the sulfo group to the aromatic polymers can be adjusted based on an additive amount of the sulfonatiny agent, a period of time for reaction with the sulfonatiny agent, a reaction temperature, kinds and amounts of Lewis bases, or the like. Of those methods, the adjustment is more preferably performed based on the additive amount of the sulfonatiny agent, the period of time for reaction with the sulfonatiny agent, the reaction temperature, or the like. Specifically, the introduction rate of sulfonates to the aromatic polymers is 0.01 to 15 mass% in terms of the content rate of sulfur (mass% of sulfur in aromatic polymer sulfonate), more preferably 0.1 to 5 mass%, and further more preferably 0.5 to 3.5 mass%.

If the introduction rate of the sulfonates to the aromatic polymers is smaller than 0.01 mass% in terms of the content rate of sulfur, it is difficult to impart flame retardancy to the aromatic polycarbonate resin composition. Further, if the introduction rate is larger than 15 mass% in terms of the content rate of sulfur, there may be cases where dispersibility to the aromatic polycarbonate resin composition is lowered, the aromatic polycarbonate resin composition becomes liable to be changed with time due to moisture absorption, and a blooming time in burning becomes long.

The introduction rate of the sulfonates to the aromatic polymers can be easily calculated by, for example, performing quantitative analysis on the sulfur contained in the aromatic polymers subjected to sulfonation treatment by a flask combustion method or the like.

The high-molecular-weight aromatic polymer sulfonate described above is more suitable than a low-molecular-weight organic sulfonate from the viewpoint of the compatibility to the aromatic polycarbonate resin, a flame retardancy imparting effect, and retention of resin characteristics.

<E component: Silicon flame retardant>

A silicon flame retardant is used for imparting flame retardancy to the aromatic polycarbonate resin composition. The additive amount of the silicon flame retardant in the aromatic polycarbonate resin composition is preferably 0.001 to 0.02 (0.1 to 2%) by mass ratio of the resin material. If the additive amount of the silicon flame retardant is less than 0.001 (0.1%) by mass ratio of the resin material, the effect of imparting flame retardancy to the aromatic polycarbonate resin composition is not sufficient. On the other hand, if the additive amount is more than 0.02 (2%), an economic efficiency becomes poor due to the lowered efficiency, and the effect of imparting flame retardancy is also saturated, which lowers the efficiency.

Examples of the silicon flame retardant include polyorganosiloxane (silicone, organosilicate, etc.) and silica. Of those, any one kind of them can be used alone or various kinds of them can be used in combination. For example, polymethylphenylsiloxane, poly(dimethyl-diphenyl-methylhydrogen)siloxane, poly dimethyl diphenyl siloxane, poly (methylethylsiloxane), poly(dimethylsiloxane), polymethylphenylsiloxane, poly(diphenylsiloxane), polydiethylsiloxane, polyethylphenylsiloxane, and resin or oil of mixture of them can be used.

At an alkyl group portion of those polyorganosiloxane, for example, a functional group of an alkyl group, an alkoxy group, a hydroxy group, an amino group, a carboxy group, a silanol group, a mercapto group, an epoxy group, a vinyl group, an aryloxy group, a polyoxyalkylene group, hydrogen, or a halogen group may be contained, and it is particularly preferable to contain an alkyl group, an alkoxy group, a hydroxy group, a vinyl group, or the like. Of those, a methylphenylsiloxane resin is the most preferable. A methyl group, a phenyl group, hydrogen, and a methoxy group are suitable. In addition, combinations of a methyl group and a phenyl group, a dimethyl group, a diphenyl group, a methyl group and hydrogen, a methyl group and a methoxy group, a phenyl group and a methoxy group, a methoxy group and hydrogen, or the like is suitable.

In the case where the silicon flame retardant is a polyorganosiloxane resin, an average molecular weight thereof is 100 or more, preferably in the range of 500 to 5000000, and a form thereof may be, for example, any of oil-like, varnish-like, gum-like, powdery, and pellet-like. Further, silica subjected to surface treatment by a silane coupling agent of a hydrocarbon compound is suitable, but the polyorganosiloxane resin described above is more preferable.

<Other flame retardant components>

Other than the flame retardants described above, other flame retardants may be used together. Examples of other flame retardants include an organic phosphate ester flame retardant, a halogenated phosphate ester flame retardant, an inorganic phosphorus flame retardant, a halogenated bisphenol flame retardant, other halogenated compound flame retardants, an antimony flame retardant, a nitrogen flame retardant, a boric acid flame retardant, a metal salt flame retardant, an inorganic flame retardant, and a silicon flame retardant, and any one of them can be used alone or various kinds of them can be used in combination.

Examples of the organic phosphate ester flame retardant include triphenyl phosphate, methylneobenzyl phosphate, pentaerythritol diethyl diphosphate, methylneopentyl phosphate, phenylneopentyl phosphate, pentaerythritol diphenyl diphosphate, dicyclopentyl hypodiphosphate, dineopentyl hypophosphite, phenyl pyrocatechol phosphite, ethyl pyrocatechol phosphate, and dipyrocatechol hypodiphosphate. Any one of them can be used alone or various kinds of them can be used in combination.

Examples of the halogenated phosphate ester flame retardant include tris(β-chloroethyl)phosphate, tris(dichloropropyl)phosphate, tris(α-bromoethyl)phosphate, tris(dibromopropyl)phosphate, tris(chloropropyl)phosphate, tris(dibromophenyl)phosphate, tris(tribromophenyl)phosphate, tris(tribromoneopentyl)phosphate, condensed polyphosphate, and condensed polyphosphonate. Any one of them can be used alone or various kinds of them can be used in combination.

Examples of the inorganic phosphorus flame retardant include red phosphorus and inorganic phosphate. Any one of them can be used alone or various kinds of them can be used in combination.

Examples of the halogenated bisphenol flame retardant include a tetrabromobisphenol A and an oligomer thereof, and a bis(bromoethyl ether)tetrabromobisphenol A. Any one of them can be used alone or various kinds of them can be used in combination.

Examples of other halogenated compound flame retardants include deca-brominated diphenyl ether, hexabromobenzene, hexabromocyclododecane, tetrabromo phthalic anhydride, (tetrabrobismophenol)epoxy oligomer, hexabromodiphenylether, tribromophenol, dibromocresyl glicidyl ether, decabromodiphenyl oxide, halogenated polycarbonate, halogenated polycarbonate copolymer, halogenated polystyrene, halogenated polyolefin, chlorinated paraffin, and perchlororocyclodecane. Any one of them can be used alone or various kinds of them can be used in combination.

Examples of the antimony flame retardant include antimony trioxide, antimony tetroxide, antimony pentoxide, and sodium antimonate. Any one of them can be used alone or various kinds of them can be used in combination.

Examples of the nitrogen flame retardant include melamine, alkyl group or aromatic substituted melamine, melamine cyanurate, isocyanurate, melamine phosphate, triazine, guanidine compound, urea, various cyanuric acid derivatives, and phosphazene compounds. Any one of them can be used alone or various kinds of them can be used in combination.

Examples of the boric acid flame retardant include zinc borate, zinc metaborate, and barium metaborate. Any one of them can be used alone or various kinds of them can be used in combination.

Examples of the metal salt flame retardant include alkali metal salts and alkali earth metal salts such as a perfluoroalkanesulfonic acid, an alkyl benzene sulfonic acid, a halogenated alkyl benzene sulfonic acid, an alkyl sulfonic acid, and a naphthalenesulfonic acid. Any one of them can be used alone or various kinds of them can be used in combination.

Examples of the inorganic flame retardant include magnesium hydroxide, aluminum hydroxide, barium hydroxide, calcium hydroxide, dolomite, hydrotalcite, basic magnesium carbonate, zirconium hydride, an inorganic metal compound hydrate such as tin oxide hydrate, metal oxides such as aluminum oxide, iron oxide, titanium oxide, manganese oxide, magnesium oxide, zirconium oxide, zinc oxide, molybdenum oxide, cobalt oxide, bismuth oxide, chromium oxide, tin oxide, nickel oxide, copper oxide, and tungsten oxide, metal powders of aluminum, iron, copper, nickel, titanium, manganese, tin, zinc, molybdenum, cobalt, bismuth, chromium, tungsten, and antimony, and carbonates such as zinc carbonate, magnesium carbonate, calcium carbonate, and barium carbonate. Any one of them can be used alone or various kinds of them can be used in combination.

The additive amount of the conventionally-known flame retardants described above differs depending on a kind thereof, a required level of flame retardancy, or the kind of the aromatic polycarbonate resin composition to which flame retardancy is to be imparted, but it is generally 0 to 0.50 (0 to 50%) by mass ratio of the polycarbonate resin, preferably 0 to 0.30 (0 to 30%), and more preferably 0 to 0.10 (0 to 10%).

Further, in addition to the additive agents described above, the aromatic polycarbonate resin composition may contain, as other additive agents, inorganic fillers, shock resistance improvers, antioxidants (hindered phenol-based, phosphorous-based, and sulfur-based), anti-static agents, ultraviolet absorbers (benzophenone-based, benzotriazole-based, hydroxyphenyltriazine-based, cyclic iminoesters-based, and cyanoacrylate-based), light stabilizers, plasticizers, compatibilizing agents, colorants (pigments and dyes), light diffusing agents, photostabilizers, nucleating agents, antibacterial agents, fluidity-improving agents, antibacterial agents, infrared absorbers, phosphors, hydrolysis inhibitors, mold release agents, and surface treatment agents. With those, flame retardancy, injection moldability, shock resistance, outer appearance, heat resistance, weather resistance, color, or rigidity is improved.

The inorganic fillers are used for the purpose of improving the mechanical strength of the aromatic polycarbonate resin composition, or further improving flame retardancy. Examples of the inorganic fillers include crystalline silica, fused silica, alumina, magnesia, talc, mica, kaolin, clay, diatomaceous earth, calcium silicate, titanium oxide, glass fibers, calcium fluoride, calcium sulfate, barium sulfate, calcium phosphate, carbon fibers, carbon nanotube, and potassiumtitanate-fibers. Any one of them can be used alone or various kinds of them can be used in combination. Of those inorganic fillers, it is preferable to use talc, mica, carbon, or glass, and particularly talc.

The additive amount of the inorganic fillers is 0.025 to 0.20 (2.5 to 20%) by mass ratio of the aromatic polycarbonate resin composition, and more preferably 0.05 to 0.15 (5 to 15%). If the additive amount of the inorganic fillers is more than 0.20 by mass ratio of the aromatic polycarbonate resin composition, there may be caused defects such as lowering of the fluidity of a resin composition fused at a time of injection molding of the aromatic polycarbonate resin composition, and lowering of shock resistance.

The shock resistance improvers are added for the purpose of improving the shock resistance of the aromatic polycarbonate resin composition. The shock resistance improvers are effective in improving toughness or a degree of elongation of the polycarbonate resin when used alone. In the mixture of a polycarbonate resin and an AS resin, the shock resistance improvers are compatible with both of them or partially reacts to improve compatibility and improves the mechanical properties or formability of the resin mixture.

As the shock resistance improvers, generally, materials used for applications of resin modification (rubber-like elastic body, thermoplastic elastomer, compatibilizing agent, and the like) can be used. Examples of the shock resistance improvers include rubber-like elastic bodies such as an ABS resin, a HIPS resin, styrene-butadiene rubber (SBR), a methyl methacrylate-styrene resin, a methyl methacrylate-butadiene-styrene (MBS) resin, isoprene-styrene rubber, isoprene rubber, polybutadiene (PB), butadiene-acrylic rubber, isoprene-acrylic rubber, and ethylene-propylene rubber, and in addition thereto, thermoplastic elastomers such as polystyrene-based (SBC), vinyl chloride-based (TPVC), polyolefin-based (TPO), polyurethane-based (PU), polyester-based (TPEE), nitrile-based, polyamide-based (TPAE), fluorine-based, chlorinated polyethylene-based (CP21E), syndiotactic-1,2-polybutadiene, trans-1,4-isoprene, and silicone-based thermoplastic elastomers, crosslinked chlorinated ethylene copolymer alloys, and ester halogen polymer alloys. More specifically, styrene-based materials such as a styrene-ethylene-butadiene-styrene copolymer (SEBS: hydrogenated styrene thermoplastic elastomer), a styrene-ethylene-propylene-styrene copolymer (SEPS: hydrogenated styrene thermoplastic elastomer), a styrene-butadiene-styrene copolymer (SBS), a styrene-hydrogenated butadiene-styrene copolymer, a styrene-isoprene-styrene block copolymer (SIS), a styrene-vinyloxazoline copolymer, and an epoxidized styrene elastomer, polycarbonate grafted to acrylonitrile-butadiene polymer, a petroleum resin obtained by polymerization of C5-C9 fractions, surface modifications by polymers of rubber fine particles, a shock resistance improver of core-shell particles having a graft layer on the outer side of the rubber in which a rubber component is butadiene rubber, acrylic rubber, silicone-acrylic composite rubber, or the like can be preferably combined.

Of those shock resistance improvers, the ABS resin, the HIPS resin, and the styrene thermoplastic elastomers are particularly preferable. Examples of the styrene thermoplastic elastomers include SEBS, SEPS, SBS, styrene-hydrogenated butadiene-styrene copolymers, SIS, styrene-vinyloxazoline copolymers, and epoxidized styrene elastomers. Of those, SEBS is the most preferable.

It should be noted that the shock resistance improvers described above may be used alone, or may be used in combination of various kinds of them.

The additive amount of the shock resistance improvers is generally 0.002 to 0.10 (0.2 to 10%) by mass ratio of the aromatic polycarbonate resin composition, more preferably 0.005 to 0.075% (0.5 to 7.5%), and still more preferably 0.01 to 0.05 (1 to 5%). If the additive amount of the shock resistance improvers is more than 0.1 (10%) by mass ratio of the aromatic polycarbonate resin composition, the flame retardancy and fluidity of the aromatic polycarbonate resin composition are lowered.

The aromatic polycarbonate resin composition can be produced as follows, for example. First, the resin material and various additive agents are mixed. At this time, for example, the resin material and the various additive agents are dispersed substantially uniformly with a kneading machine such as a tumbler, a reblender, a mixer, an extruder, or a kneader. Then, the mixture is molded into a predetermined shape, for example, shape of a casing or a component part of various products such as home appliances, automobiles, information equipment, business equipment, a telephone set, stationery, furniture, and fibers, by a molding method such as injection molding, injection compression molding, extrusion molding, blow molding, vacuum molding, press molding, foam molding, or supercritical molding, thus completing the aromatic polycarbonate resin composition.

Examples

Next, the aromatic polycarbonate resin composition will be described along specific examples, but the present invention is not limited to the following examples.

[Example 1] to [Example 5]

In Examples 1 to 5, the aromatic polycarbonate resin composition was produced with use of predetermined materials as described below, and characteristics thereof were then investigated and evaluated.

(Materials of aromatic polycarbonate resin composition)

<A component: Aromatic polycarbonate (PC) resin>

<A-1> Aromatic PC resin having average molecular weight of 43000 (product name Panlite L-1225L; manufactured by TEIJIN CHEMICALS LTD.)
<A-2> Aromatic PC resin having average molecular weight of 61500 (product name Panlite K-1300Y; manufactured by TEIJIN CHEMICALS LTD.)
<A-3> Aromatic PC resin having average molecular weight of 55000, recovered from used containers (bottles for bottled water)
<A-4> Aromatic PC resin having average molecular weight of 30000, recovered from discarded compact discs (CDs) from which coating films are dissolved and removed with use of warmed aqueous sodium hydroxide

<B component: Polystyrene (PS) resin that does not contain rubber component>

<B-1> AS resin (product name LITAC-A 120PF; manufactured by NIPPON A&L INC.)
<B-2> PS resin recovered from reel within discarded video cassette for commercial use
<B-3> PS resin recovered from used expanded polystyrene foam
<B-4> In Comparative Example 6, an ABS resin (product name DP-611; manufactured by Techno Polymer Co., Ltd.) was used as a PS resin containing a rubber component.

<C component: Polyfluoroolefin resin>

<C-1> Polytetrafluoroethylene (PTFE) resin (product name: Fluon PTFE fine powder CD076; manufactured by Asahi Glass Co., Ltd.)

<D component: Organic sulfonate flame retardant>

<D-1> AS resin sulfonate (PASS-K, content rate of sulfur = 1.2 mass%)

An AS resin sulfonate was synthesized as follows.

First, an AS resin (mass ratio acrylonitrile:styrene = 75:25, weight-average molecular weight in terms of polystyrene = 102000) was frozen using liquid nitrogen, and then crushed into powder and passed through a screen of 80 mesh. The resin powder of 50 g was transferred to an eggplant-shaped flask, to which a rotary evaporator was attached, and heated to 60°C and rotated. At this time, the resin powder entered a fluidized state in the flask by the rotation of the evaporator.

Next, a gas within the flask was removed using a vacuum pump and the pressure was reduced to about 0.01 MPa. Subsequently, by means of opening/closing operation of a valve, an $SO_3$ gas was fed to the flask from a tank previously filled with 2.2 g of $SO_3$ and heated to 60°C. By the injection of the $SO_3$ gas, the pressure in the flask was 0.02 MPa. The temperature was kept at 60°C in this sealed state, and a sulfonation reaction was generated for four hours. After that, the $SO_3$ gas in the flask was replaced with a nitrogen gas and removed.

Next, a potassium hydroxide solution was added to the resin powder in the flask and adjusted to have pH=7, the sulfo group introduced into the resin was counteracted, and a potassium salt was obtained. After that, a glass filter was used to filter the resin powder from the reaction solution. After the resin powder was washed with water, filtration was performed again and the resin powder was filtered. A hot air circulation drying machine was used to dry the resin powder by blow at 100°C to obtain 52 g of white powder. This powder was subjected to analysis of sulfur content, and the content rate of sulfur was 1.2 mass%.

<D-2> PS resin sulfonate I (PSS-K, content rate of sulfur = 0.6 mass%)

Instead of the AS resin described above, a PS resin recovered from used expanded polystyrene foam (weight-average molecular weight = 198000) was used, and similarly to D-1 except that SO3 previously injected in the tank was not 2.2 g but 1.1 g, the PS resin was sulfonated to synthesize a PS resin sulfonate I. The content rate of the sulfur of the obtained resin powder was 0.6 mass%.

<D-3> Potassium perfluorobutane sulfonate

Potassium perfluorobutane sulfonate commercially available (product name F-114; flame retardant for polycarbonate manufactured by DIC Corporation) was used as a flame retardant.

<D-4> PS resin sulfonate II (PSS-Na, content rate of sulfur = 15.1 mass%)

In Example 3 to be described later, as a flame retardant having a large sulfur content rate, sodium polystyrene sulfonate commercially available (weight-average molecular weight =70000, content rate of sulfur = 15.1 mass%) was used.

<E component: Silicon flame retardant>

<E-1> Dimethyl diphenyl methyl hydrogen silicone oil (product name KR-2710; Shin-Etsu Chemical Co., Ltd.)
<E-2> Methyl phenyl silicone resin (product name X-40-9805; manufactured by Shin-Etsu Chemical Co., Ltd.)

(Production of aromatic polycarbonate resin composition)

First, the resin materials and additive agents described above were combined at a combination amount described in Table 1 to be described later and mixed with a tumbler, and then fused and kneaded with a double-screw unidirectional rotation kneading extruder (product name ZE0A; manufactured by Berstorff Corporation), to thereby obtain pellets of an aromatic polycarbonate resin composition. Extrusion conditions were a discharge rate of 15 kg/h, a screw rotation speed of 150 rpm, and an extrusion temperature of 265°C from a first supply port to a die portion.
Next, the pellets were dried with the hot air circulation drying machine at 120°C for eight hours. After that, injection molding was performed using an injection molding machine at a cylinder temperature of 280°C and a mold temperature of 65°C to thereby produce a test piece for measuring flame retardancy, a test piece for measuring pencil hardness, a test piece for measuring heat resistance (deflection temperature under load), a test piece for measuring Izod impact strength, a test piece for measuring flexural modulus, a solvent resistance test piece (plate), and a bezel for a liquid crystal television, used for confirming formability (front frame portion, average thickness: 2.0 mm), were produced.

(Measurement and evaluation of characteristics of aromatic polycarbonate resin composition)

With use of the test pieces of the aromatic polycarbonate resin composition thus obtained, resin properties typified by flame retardancy, pencil hardness, fluidity, thermal deformation temperature, Izod impact strength, and flexural modulus, and characteristics such as injection moldability, solvent resistance of a molded product, temporal stability under high temperature and humidity, and recyclability were investigated and evaluated.

<Flame retardancy>

UL standard 94 (UL94V) vertical flame test was performed on an aromatic polycarbonate resin composition having a thickness of 2.0 mm to evaluate flame retardancy. The flame retardancy is considered to be V-0 > V-1 > V-2 in a descending order of excellence and is required to be V-1 or more.

<Pencil hardness>

According to JIS K5400, the surface hardness of the aromatic polycarbonate resin composition was measured. The pencil hardness is required to be F or more.

<Fluidity (MFR: melt flow rate)>

According to JIS K7210, the fluidity of the aromatic polycarbonate resin composition at a time of fusion was measured under conditions of resin temperature of 280°C and load of 2.16 Kg. The fluidity is required to be 7 to 8 or more.

<Heat resistance (Thermal deformation temperature)>

In conformity with ASTM D648 (Method A), the deflection temperature under load was measured under a measurement condition of 4.6 kgf/cm2.

<Izod impact strength>

According to JIS K7110, the measurement of Izod impact strength with notch was performed. The Izod impact strength is required to be 5 or more.

<Flexural modulus>

According to ASTM A790, a flexural modulus was measured.

<Formability>

A mold of a bezel for a liquid crystal television (thickness: 2.0 mm) was used for molding, and the confirmation of an outer appearance (state of sink mark or weld line) and the evaluation of the strength of welded portions and strength of bosses by ten times of screw tightening were performed to confirm a level of a practical use.

<Solvent resistance>

A test plate was produced and (outer appearance) confirmation of solvent resistance regarding oil and grease resistance (castor oil: 40°C×95%×24hr) and alcohol resistance (ethanol: ambient temperature, 65°C×95%×24hr) was performed.

<High temperature and humidity preserving property>

The resin pellets were preserved in a constant temperature and humidity tank of 85°C×80Rh% for 400 hours, and a change in molecular weight at a polycarbonate resin portion before and after the storage was measured by GPC (in terms of polystyrene). Based on whether the molecular weight before the storage was kept 90% or more 400 hours later, the long-term preservation stability was determined.

<Recyclability>

Flame-retardant PC resins repeatedly subjected to fusion and kneading three times and then maintaining an Izod impact strength corresponding to 90% of the initial value were determined to be good.
Table 1 shows as a whole the composition of the resin materials in Examples 1 to 5, kinds and amounts of the additive agents, and characteristics of the obtained aromatic polycarbonate resin compositions. In the table, the amount of a resin component is represented by mass% in a resin material, and the additive amount of an additive agent is represented by mass ratio (%) to the resin material.
[Table 1]

| | | | Example 1 | Example 2 | Example 3 | Example 4 | Example 5 |
|---|---|---|---|---|---|---|---|
| Composition of resin material | A (mass%) | A – 1 | 95 | 95 | | 45 | |
| | | A – 2 | | | | | 35 |
| | | A – 3 | | | 90 | | |
| | | A – 4 | | | | 40 | 57.5 |
| | B (mass%) | B – 1 | 5 | | | 15 | 7.5 |
| | | B – 2 | | | 10 | | |
| | | B – 3 | | 5 | | | |
| | | B – 4 | | | | | |
| Additive amount of additive agent | C (%) | C – 1 | 0.4 | 0.5 | 0.5 | 0.2 | 0.4 |
| | D (%) | D – 1 | 0.5 | 0.3 | | | 0.5 |
| | | D – 2 | | | 1.0 | | |
| | | D – 3 | | | | 0.05 | |
| | | D – 4 | | | | | |
| | E (%) | E – 1 | 0.1 | | 0.1 | 2.0 | |
| | | E – 2 | | 1.0 | | | 0.1 |
| Characteristics | Flame retardancy | | V – 0 | V – 0 | V – 1 | V – 1 | V – 1 |
| | Pencil hardness | | F | F | F | F | F |
| | Fluidity (g/10min) | | 15 | 18 | 8 | 29 | 16 |
| | Thermal deformation temperature (℃) | | 138 | 135 | 123 | 135 | 137 |
| | Izod impact strength (Kgf·cm/cm²) | | 8.0 | 7.5 | 5.9 | 5.5 | 6.4 |
| | Flexural modulus (Kgf/cm²) | | 26300 | 26000 | 24500 | 24400 | 26300 |
| | Formability | | Good | Good | Good | Good | Good |
| | Solvent resistance | | Good | Good | Good | Good | Good |
| | High temperature and humidity preserving property | | Good | Good | Good | Good | Good |
| | Recyclability | | Good | Good | Good | Good | Good |

As shown in Table 1, the flame retardancy of the aromatic polycarbonate resin composition obtained in each of Examples 1 to 5 is V-1 or more, and it is found that if a ratio of the aromatic polycarbonate resin in the resin material is 85 mass% or more, the requirement of the flame retardancy can be met. Specifically, Examples 1 and 2 in which the ratio of the aromatic polycarbonate resin is 95 mass% have flame retardancy of V-0, and Examples 3 to 5 in which the ratio is 85 to 92.5 mass% have flame retardancy of V-1. Accordingly, it is found that in order to achieve higher flame retardancy of V-0, the ratio of the aromatic polycarbonate resin in the resin material has to be 93 to 95 mass%.

Further, any of the aromatic polycarbonate resin compositions has a surface whose pencil hardness is F or higher, and therefore a hard coating layer is unnecessary, which is advantageous in lowering of costs and improvement of a recycling rate. In addition, the resin properties typified by the fluidity, the thermal deformation temperature, the Izod impact strength, and the flexural modulus, and the characteristics such as the injection moldability, the solvent resistance of a molded product, the temporal stability under high temperature and humidity, the recyclability, and the like were found to be excellent.

The weight-average molecular weights (or arithmetic means thereof) of the aromatic polycarbonate resins in Examples 1 to 5 are about 43000, 43000, 55000, 37000, and 42000, respectively. Therefore, it is found that the weight-average molecular weight (or arithmetic mean thereof) of the aromatic polycarbonate resin is appropriate at least within the range of 37000 to 55000.

In Comparative Examples 1 to 6, the composition of resin materials was largely changed as compared to Examples 1 to 5 to synthesize aromatic polycarbonate resin compositions, characteristics thereof were investigated, and requirements of the resin material were studied. Table 2 below shows as a whole the composition of the resin materials in Comparative Examples 1 to 6, kinds and ratios of the additive agents, and characteristics of the obtained aromatic polycarbonate resin compositions. The items in the table are the same as those in Examples 1 to 5. It should be noted that VNG described for evaluation of the flame retardancy means that flame retardancy of V-2 has not been achieved. Further, the unit of Izod impact strength was omitted (same for Table 3).

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition of resin material | A (mass%) | A – 1 | | 45 | 100 | 97.5 | 80 | 95 |
| | | A – 2 | 95 | | | | | |
| | | A – 3 | | | | | | |
| | | A – 4 | | 50 | | | | |
| | B (mass%) | B – 1 | 5 | 5 | | 2.5 | 20 | |
| | | B – 2 | | | | | | |
| | | B – 3 | | | | | | |
| | | B – 4 | | | | | | 5 |
| Additive amount of additive agent | C (%) | C – 1 | 0.4 | 0.4 | 0.4 | 0.2 | 0.2 | 0.4 |
| | D (%) | D – 1 | 0.5 | | 0.3 | | | 0.5 |
| | | D – 2 | | | | | | |
| | | D – 3 | | | | 0.05 | 0.05 | |
| | | D – 4 | | | | | | |
| | E (%) | E – 1 | 0.1 | 0.1 | | 2.0 | 2.0 | 0.1 |
| | | E – 2 | | | | | | |
| Characteristics | | Flame retardancy | V – 0 | VNG | V – 0 | V – 1 | VNG | VNG |
| | | Pencil hardness | F | F | HB or lower | HB or lower | F | F |
| | | Fluidity (g/10min) | 3.5 | 28 | 14 | 16 | 32 | 14 |
| | | Thermal deformation temperature (℃) | 143 | 136 | 139 | 137 | 131 | 134 |
| | | Izod impact strength (Kgf·cm/cm²) | 35.8 | 4.8 | 8.8 | 7.8 | 5.0 | 11.5 |
| | | Flexural modulus (Kgf/cm²) | 23600 | 24000 | 23000 | 27000 | 25500 | 23500 |
| | | Formability | Bad | Good | Good | Good | Good | Good |
| | | Solvent resistance | Good | Bad | Not good | Good | Good | Good |
| | | High temperature and humidity preserving property | Good | Good | Good | Good | Good | Good |
| | | Recyclability | Good | Good | Good | Good | Good | Good |

[Comparative Example 1]

In an aromatic polycarbonate resin composition of Comparative Example 1, an aromatic polycarbonate resin (A component) is A-2 having a large weight-average molecular weight Mw (Mw=61500). Therefore, the weight-average molecular weight of the aromatic polycarbonate resin exceeds an appropriate range of 37000 to 55000. As a result, irrespective of the same conditions as those in Example 1 except for the range, the fluidity of the resin composition was insufficient and the injection moldability was deteriorated.

[Comparative Example 2]

In an aromatic polycarbonate resin composition of Comparative Example 2, an aromatic polycarbonate resin (A component) is formed of 45 mass% of A-1 (Mw=43000) and 50 mass% of A-4 (Mw=30000), and therefore an arithmetic mean thereof is small (Mw= about 36000). Therefore, the weight-average molecular weight of the aromatic polycarbonate resin falls below an appropriate range of 37000 to 55000. As a result, irrespective of the same conditions as those in Example 1 except for the range, the flame retardancy and shock resistance of the resin composition was lowered. Further, since a part of the resin composition is dissolved in a solvent, the solvent resistance was lowered.

[Comparative Example 3]

In an aromatic polycarbonate resin composition of Comparative Example 3, a styrene resin (B component) that does not contain a rubber component was not added. In this case, the pencil hardness of the surface of the resin composition was HB or lower, which caused insufficient hardness. Further, the solvent resistance was slightly bad.

[Comparative Example 4]

In an aromatic polycarbonate resin composition of Comparative Example 4, the ratio of a styrene resin (B component) that does not contain a rubber component is 2.5 mass%, which is not sufficient. In this case, while the solvent resistance was improved as compared to Comparative Example 3 in which B component was not contained, the pencil hardness of the surface was kept to be HB or lower and the insufficient hardness remained. The flame retardancy was slightly reduced from V-0 to V-1, but the requirement was maintained.

[Comparative Example 5]

In an aromatic polycarbonate resin composition of Comparative Example 5, the ratio of a styrene resin (B component) that does not contain a rubber component is 20 mass%. In this case, the pencil hardness of the surface was F and the requirement was met; however, the flame retardancy was reduced to VNG and the requirement was not met.

[Comparative Example 6]

In an aromatic polycarbonate resin composition of Comparative Example 6, 5 mass% of an ABS resin (B-4) containing a rubber component as a styrene resin is contained. Comparative Example 6 is the same as Example 1 except for that the kind of B component is different. In this case, the flame retardancy was VNG and was significantly reduced as compared to that in Example 1. This is considered because the C=C double bond included in the rubber component is rich in reactivity and flammability is obtained.

From Comparative Examples described above, the weight-average molecular weight of the aromatic polycarbonate resin should not be 36000 or less or 61500 or more. Further, the ratio of the styrene resin in the resin material should not be 2.5 mass% or less or 20 mass% or more. Those conclusions do not conflict with the conclusions obtained in Examples 1 to 5. Further, the styrene resin is required to be a resin that does not contain a rubber component (having less C=C double bonds).

In Comparative Examples 7 to 9 and Cases 1 to 3, the additive amount of additive agents or the like was largely changed as compared to Examples 1 to 5 to synthesize aromatic polycarbonate resin compositions, characteristics thereof were investigated, and requirements of the additive agents were studied. Table 3 below shows as a whole the composition of resin materials in Comparative Examples 7 to 9 and Cases 1 to 3, kinds and ratios of the additive agents, and characteristics of the obtained aromatic polycarbonate resin compositions. The items in the table are the same as those in Examples 1 to 5.

[Table 3]

| | | | Case 1 | Comparative Example 7 | Case 2 | Case 3 | Comparative Example 8 | Comparative Example 9 |
|---|---|---|---|---|---|---|---|---|
| Composition of resin material | A (mass%) | A – 1 | | 95 | 45 | | 95 | Commercially-available ABS/PC resin composition |
| | | A – 2 | | | | | | |
| | | A – 3 | 90 | | | | 90 | |
| | | A – 4 | | | 40 | | | |
| | B (mass%) | B – 1 | | 5 | 15 | | | |
| | | B – 2 | 10 | | | | 10 | |
| | | B – 3 | | | | | | 5 |
| | | B – 4 | | | | | | |
| Additive amount of additive agent | C (%) | C – 1 | 0.1 | 0.4 | 0.2 | 0.5 | 0.5 | |
| | D (%) | D – 1 | | | | | 0.3 | |
| | | D – 2 | 1.0 | | | | | |
| | | D – 3 | | | 2.0 | | | |
| | | D – 4 | | | | 1.0 | | |
| | E (%) | E – 1 | 0.1 | 0.1 | 2.0 | 0.1 | | |
| | | E – 2 | | | | | | |
| Characteristics | | Flame retardancy | V – 2 | VNG | VNG | V – 1 | VNG | V – 0 |
| | | Pencil hardness | F | F | F | F | F | HB |
| | | Fluidity (g/10min) | 7 | 15 | 26 | 9 | 20 | 39 |
| | | Thermal deformation temperature (°C) | 124 | 137 | 120 | 122 | 137 | 88 |
| | | Izod impact strength (Kgf·cm/cm²) | 6.0 | 7.9 | 5.2 | 5.8 | 7.6 | 2.9 |
| | | Flexural modulus (Kgf/cm²) | 26000 | 26000 | 24000 | 24000 | 26500 | 26500 |
| | | Formability | Good | Good | Good | Good | Good | Good |
| | | Solvent resistance | Good | Good | Good | Good | Good | Good |
| | | High temperature and humidity preserving property | Good | Good | Good | Bad | Good | Bad |
| | | Recyclability | Good | Good | Good | Good | Good | Bad |

[Case 1]

In an aromatic polycarbonate resin composition of Case 1, an additive amount of a polyfluoroolefin resin (C component) is 0.1%, which is small. In this case, irrespective of the same conditions as those in Example 3 except for the amount, drip is caused at a time the resin composition is burned, and the flame retardancy was lowered to V-2, which did not meet the requirement.

Comparative Example in which a polyfluoroolefin resin (C component) is not added to an aromatic polycarbonate resin composition is omitted. In this case, however, the flame retardancy of the resin composition is apparently lowered more than that in Case 1.

[Comparative Example 7]

In an aromatic polycarbonate resin composition of Comparative Example 7, an organic sulfonate flame retardant (D component) is not added. In this case, irrespective of the same conditions as those in Example 1 except for this condition, the flame retardancy of the resin composition was reduced to VNG and the requirement was not met.

[Case 2]

An aromatic polycarbonate resin composition of Case 2 is the same as that of Example 4 except that the additive amount of the organic sulfonate flame retardant (D component) is increased to 2.0%. In this case, the flame retardancy of the resin composition was VNG, the increase of the additive amount of the organic sulfonate flame retardant (D component) deteriorates the flame retardancy conversely, and the requirement was not met.

[Case 3]

In an aromatic polycarbonate resin composition of Case 3, 1.0% of an organic sulfonate flame retardant having a sulfur content rate of 15 mass% or more was added as an organic sulfonate flame retardant. Conditions other than the above are the same as those of Example 3. In this case, the flame retardancy of the resin composition was V-1 and the same flame retardancy as that of Example 3 was obtained. However, the preservation stability under high temperature and high humidity was lowered. This is considered because moisture in the air is absorbed by sulfonates contained in large amount in the flame retardant and the polycarbonate resin is hydrolyzed by the moisture.

[Comparative Example 8]

In an aromatic polycarbonate resin composition of Comparative Example 8, a silicon flame retardant (E component) is not added. Conditions other than the above are the same as those of Example 2. In this case, the flame retardancy of the resin composition was VNG and the requirement was not met.

[Comparative Example 9]

An aromatic polycarbonate resin composition of Comparative Example 9 is a commercially-available flame-retardant ABS/PC resin composition containing a phosphate ester flame retardant. In this case, the flame retardancy is V-0 at a thickness of 1.6 mm, which is excellent. However, the pencil hardness is HB and the hardness of a resin surface is insufficient. Further, the preservation stability under high temperature and high humidity and the recyclability were poor. The aromatic polycarbonate resin compositions of Examples 1 to 5 are resin compositions excellent in surface hardness, heat resistance, shock resistance, preservation stability, and recyclability, as compared to the flame-retardant ABS/PC resin composition containing a phosphate ester flame retardant.

From the above, it is found that to achieve the required flame retardancy of the aromatic polycarbonate resin composition, the polyfluoroolefin resin (C component), the organic sulfonate flame retardant (D component), and the silicon flame retardant (E component) are all needed. Further, from the results of Examples 1 to 5, the additive amount of the polyfluoroolefin resin is appropriate if it falls within at least the range of 0.002 to 0.005 (0.2 to 0.5%) by mass ratio of the resin material. Similarly, the additive amount of the organic sulfonate flame retardant is appropriate if it falls within at least the range of 0.0005 to 0.010 (0.05 to 1.0%) by mass ratio of the resin material. Further, the silicon flame retardant is appropriate if it falls within at least the range of 0.001 to 0.020 (0.1 to 2.0%) by mass ratio of the resin material. It should be noted that when an excessive amount of the organic sulfonate flame retardant is added or the organic sulfonate flame retardant containing much sulfur is used, the flame retardancy is lowered conversely or the preservation stability of the resin composition under high temperature and high humidity is lowered in some cases.

Hereinabove, the present invention has been described based on the embodiment and examples, but the present invention is not limited thereto and can of course be variously changed without departing from the gist of the present invention.

Industrial Applicability

The flame-retardant PC resin composition of the present invention has excellent resin surface height, flame retardancy, heat resistance, rigidity, preservation stability, and recyclability, and is useful for various types of electrical/ electronic equipment, OA equipment, vehicle parts, machine parts, and various applications such as other agricultural materials, shipping containers, play equipment, and general merchandise.

**Claims**

1. An aromatic polycarbonate resin composition, comprising:

as a main resin material, an aromatic polycarbonate resin occupying 85 to 95 mass% of the main resin material and having a weight-average molecular weight of 37000 to 55000 in polystyrene equivalent molecular weight, and a polystyrene resin occupying 15 to 5 mass% of the main resin material and containing no rubber component; and
as an additive agent, a polyfluoroolefin resin, an organic sulfonate flame retardant, and a silicon flame retardant.

2. The aromatic polycarbonate resin composition according to claim 1, wherein
the aromatic polycarbonate resin and the polystyrene resin occupy 93 to 95 mass% and 7 to 5 mass% of the main resin material, respectively.

3. The aromatic polycarbonate resin composition according to claim 1, wherein
the polyfluoroolefin resin has an additive amount of 0.002 to 0.005 by mass ratio of the main resin material.

4. The aromatic polycarbonate resin composition according to claim 1, wherein
the organic sulfonate flame retardant has an additive amount of 0.0005 to 0.010 by mass ratio of the main resin material.

5. The aromatic polycarbonate resin composition according to claim 1, wherein
the silicon flame retardant has an additive amount of 0.001 to 0.020 by mass ratio of the main resin material.

6. The aromatic polycarbonate resin composition according to claim 1, wherein
the polystyrene resin contains one or more kinds of polystyrene resins and/or one or more kinds of acrylonitrile-styrene copolymer resins.

7. The aromatic polycarbonate resin composition according to claim 1, wherein
the organic sulfonate flame retardant contains a compound having a structure in which sulfonates are introduced to a polymer having aromatic rings.

8. The aromatic polycarbonate resin composition according to claim 1, wherein
the organic sulfonate flame retardant includes the number of sulfonates corresponding to 0.01 to 15 mass% in terms of sulfur content.

9. The aromatic polycarbonate resin composition according to claim 1, wherein
the silicon flame retardant contains a polyorganosiloxane resin.

10. A molded product, which is formed by molding the aromatic polycarbonate resin composition according to any one of claims 1 to 9 into a predetermined shape.

**INTERNATIONAL SEARCH REPORT**

| International application No. |
| --- |
| PCT/JP2010/001225 |

A.  CLASSIFICATION OF SUBJECT MATTER
*C08L69/00*(2006.01)i, *C08K5/42*(2006.01)i, *C08L25/04*(2006.01)i, *C08L27/12* (2006.01)i, *C08L83/04*(2006.01)i, *C08L101/02*(2006.01)i

According to International Patent Classification (IPC) or to both national classification and IPC

B.  FIELDS SEARCHED

Minimum documentation searched (classification system followed by classification symbols)
C08L69/00, C08K3/00-13/08

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2002-220527 A  (Idemitsu Petrochemical Co., Ltd.), 09 August 2002 (09.08.2002), claims 1, 3 to 7; paragraphs [0014], [0018] to [0019], [0021] to [0025], [0052] to [0068] & WO 2002/059205 A1 | 1-10 |
| X | JP 2004-143410 A  (Idemitsu Petrochemical Co., Ltd.), 20 May 2004 (20.05.2004), claims 1, 9, 15; paragraphs [0012], [0033] to [0035], [0054] to [0069] & US 2005/0261414 A1    & US 2008/0076866 A1 & EP 1541632 A1        & WO 2004/018561 A1 & CN 1678684 A        & CN 101372551 A | 1-10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 April, 2010 (15.04.10) | 11 May, 2010 (11.05.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/001225

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2005-54085 A  (Idemitsu Petrochemical Co., Ltd.), 03 March 2005 (03.03.2005), claims 1 to 3; paragraphs [0014], [0016], [0031] to [0033], [0043] to [0044], [0060] to [0065] (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0374629 B
- JP HEI062374 B
- JP 2002220527 A
- JP 2004143410 A
- JP 2005054085 A
- JP HEI06223416 B
- JP HEI10269634 B
- JP HEI10249315 B